(19) Europäisches Patentamt / European Patent Office / Office européen des brevets

(11) **EP 4 268 363 B1**

(12) **FASCICULE DE BREVET EUROPEEN**

(45) Date de publication et mention
de la délivrance du brevet:
**23.10.2024   Bulletin 2024/43**

(21) Numéro de dépôt: **21851670.6**

(22) Date de dépôt: **13.12.2021**

(51) Classification Internationale des Brevets (IPC):
**H02S 50/00** *(2014.01)*

(52) Classification Coopérative des Brevets (CPC):
**H02S 50/00;** Y02E 10/50

(86) Numéro de dépôt international:
**PCT/FR2021/052307**

(87) Numéro de publication internationale:
**WO 2022/136767 (30.06.2022 Gazette 2022/26)**

(54) **PROCÉDÉ DE DIAGNOSTIC DES INSTALLATIONS PHOTOVOLTAÏQUES PAR ANALYSE DE COURBES IV**

VERFAHREN ZUR DIAGNOSE VON FOTOVOLTAISCHEN ANLAGEN DURCH ANALYSE VON IV-KURVEN

METHOD FOR DIAGNOSING PHOTOVOLTAIC INSTALLATIONS VIA ANALYSIS OF IV CURVES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **23.12.2020   FR 2014093**

(43) Date de publication de la demande:
**01.11.2023   Bulletin 2023/44**

(73) Titulaire: **Commissariat à l'énergie atomique
et aux énergies alternatives
75015 Paris (FR)**

(72) Inventeurs:
• **AMHAL, Mohamed
  38054 Grenoble Cedex 09 (FR)**
• **AL SHAKARCHI, Franck
  38054 Grenoble Cedex 09 (FR)**
• **LESPINATS, Sylvain
  38054 Grenoble Cedex 09 (FR)**

(74) Mandataire: **Brevalex
Tour Trinity
1 B Place de la Défense
92400 Courbevoie (FR)**

(56) Documents cités:
**US-A1- 2015 094 967     US-A1- 2016 233 830**

**Description**

**DOMAINE TECHNIQUE ET ETAT DE LA TECHNIQUE ANTERIEURE**

La présente invention se rapporte à une procédure pour détecter un défaut d'un système photovoltaïque. Le document US 2015/094967 A1 décrit un procédé de diagnostic des installations photovoltaïques.

Un système photovoltaïque peut comprendre un ou plusieurs panneaux solaires ou cellules photovoltaïques. Habituellement, un tel système est sujet à une pluralité de types de défauts, qui réduisent la production d'énergie du système. Parmi les différents défauts connus, citons notamment la couverture du panneau par un ombre, ou une couverture partielle du panneau par une salissure, ou un court-circuit de la diode de bypass.

Pour optimiser la fonction du système photovoltaïque, un exploitant a besoin de détecter la présence d'un tel défaut et d'identifier son type pour pouvoir le corriger.

Une courbe associant un courant du système à une tension (autrement dit : le courant du système en fonction de la tension, courbe IV) est un moyen privilégié pour établir un diagnostic du système photovoltaïque. En comparaison avec un système sans défaut, ladite courbe IV se déforme sous l'effet d'un défaut.

Il est pourtant difficile de détecter, par une inspection visuelle de la courbe IV, le type de défaut qui affecte le système.

**EXPOSÉ DE L'INVENTION**

C'est par conséquent un but de la présente invention d'offrir une procédure pour détecter un défaut ou plusieurs défauts d'un système photovoltaïque. La procédure comprend les étapes de :

- effectuer une mesure sur le système photovoltaïque pour déterminer une pluralité (A) de K couples de valeurs :

$$A = \left\{V_j^{système}, I_j^{système}\right\}$$

, chaque couple associant une tension (V) à un courant (I), où j = 1...K.

- déterminer un jeu d'indicateurs à partir des K couples valeurs mesurés sur le système photovoltaïque,
- comparer le jeu d'indicateurs provenant du système photovoltaïque avec une pluralité de N jeux comprenant chacun les mêmes indicateurs, chacun des N jeux étant caractéristique d'un seul type de défaut connu,
- déterminer le défaut ou les défauts en fonction du résultat de la comparaison.

La détermination de chaque jeu d'indicateurs comprend les étapes suivantes :

- fournir une pluralité de K couples de valeurs, chaque couple associant une tension à un courant et provenant du système à caractériser ou d'un système à défaut connu A par

$$A = \left\{V_j^{système}, I_j^{système}\right\}$$

et

- fournir une pluralité de K couples de valeurs en provenance d'un système sans défaut,

$$B = \left\{V_j^{sans\ défaut}, I_j^{sans\ défaut}\right\},$$

où j = 1...K

- déterminer au moins une pluralité de couples intermédiaires parmi une première pluralité C, une deuxième pluralité D et une troisième pluralité E où

$$C = \left\{V_j^{sans\ défaut}, \quad I_j^{sans\ défaut} \frac{I_{SC}^{système}}{I_{SC}^{sans\ défaut}}\right\},$$

$$D = \left\{V_j^{sans\ défaut} \frac{V_{OC}^{système}}{V_{OC}^{sans\ défaut}}, \quad I_j^{sans\ défaut}\right\},$$

$$E = \left\{ V_j^{sans\ défaut} \frac{V_{OC}^{système}}{V_{OC}^{sans\ défaut}} \ , \ I_j^{sans\ défaut} \frac{I_{SC}^{système}}{I_{SC}^{sans\ défaut}} \right\},$$

où $V_{OC}$ représente la tension de circuit ouvert et $I_{SC}$ le courant de court-circuit du système,

- établir, selon la pluralité déterminée, le jeu d'indicateurs basé sur un écart entre les pluralités D et B et/ou entre les pluralités C et B et/ou entre les pluralités E et A. Ladite procédure de détection peut comprendre une étape de calcul d'une ou plusieurs valeur(s) caractéristique(s), selon la pluralité déterminée, à partir de la pluralité A et/ou à partir de la pluralité B et/ou à partir de la pluralité C et/ou à partir de la pluralité D et/ou à partir de la pluralité E avant d'établir le jeu d'indicateurs basé sur ledit écart.

La valeur caractéristique ou les valeurs caractéristiques peuvent comprendre, selon la pluralité déterminée :

- une pente entre deux points, les deux points appartenant à la même pluralité parmi A, B, C, D ou E ou
- une dérivée de premier degré associée à un point appartenant à une seule pluralité parmi A, B, C, D ou E.

La valeur caractéristique peut aussi comprendre une pente entre deux points, le premier point appartenant, selon la pluralité déterminée, à une pluralité parmi A, C, D où E, le deuxième point appartenant à la pluralité B.

Ledit écart, selon la pluralité déterminée, entre deux pluralités parmi A, B, C, D et E peut ensuite être déterminé par calcul d'une différence entre les valeurs caractéristiques des deux pluralités.

Selon une variante de la procédure, toutes les pluralités C, D et E peuvent être déterminées et

- plusieurs valeurs caractéristiques sont calculées, pour chacune des pluralités A, B, C, D et E et
- un premier jeu d'indicateurs est établi en calculant la différence entre les valeurs caractéristiques des pluralités D et B et
- un deuxième jeu d'indicateurs est établi en calculant la différence entre les valeurs caractéristiques des pluralités C et B et
- un troisième jeu d'indicateurs est établi en calculant la différence entre les valeurs caractéristiques des pluralités E et A.

L'étape de comparaison de jeu d'indicateurs provenant du système photovoltaïque à caractériser avec la pluralité de N jeux comprenant chacun les mêmes indicateurs peut ainsi être effectuée :

une première fois à partir du premier jeu d'indicateurs et/ou,
une deuxième fois à partir du deuxième jeu d'indicateurs et/ou
une troisième fois à partir du troisième jeu d'indicateurs.

De préférence, la comparaison peut être effectuée à partir du premier et deuxième et troisième jeu d'indicateurs.

L'étape de comparaison peut avantageusement être effectuée par un algorithme de classification, de préférence par un algorithme de k plus proches voisins, ou un algorithme d'arbre de décision ou un algorithme de logique floue.

Selon une variante, la procédure utilise K=3 couples de valeurs, les 3 couples comportant de préférence un premier couple comprenant une tension à circuit ouvert ($V_{OC}$), un deuxième couple comprenant un courant de court-circuit ($I_{CC}$) et un troisième couple comprenant une tension et un courant à puissance maximale ($V_{MPP}$ , $I_{MPP}$).

Avantageusement, la pluralité de K couples de valeurs provenant d'un système sans défaut est obtenue :

- par une simulation numérique d'un système sans défaut
- ou par une mesure effectuée sur le système à caractériser à un moment où ledit système était considéré sans défaut ou
- par une mesure effectuée sur un autre système photovoltaïque considéré sans défaut.

Ledit algorithme de classification peut avoir été entraîné en utilisant une pluralité B provenant d'un système sans défaut et une ou plusieurs pluralités A provenant d'un système à défaut connu, dans laquelle les pluralités A et B ont été obtenus par une simulation numérique du système.

Il est avantageux d'utiliser

- un premier jeu d'indicateurs étant caractéristique d'un défaut de seulement une partie d'une surface du système photovoltaïque et

- un deuxième jeu d'indicateurs étant caractéristique d'un défaut présent sur la surface complète du système photovoltaïque et
- un troisième jeu d'indicateurs étant caractéristique d'un défaut de dégradation induite potentielle (PID) et
- un quatrième jeu d'indicateurs étant caractéristique d'un défaut de connexion et
- un cinquième jeu d'indicateurs étant caractéristique d'un défaut de la diode de bypass en court-circuit et
- un sixième jeu d'indicateurs étant caractéristique d'un défaut de la diode de bypass en circuit ouvert et
- un septième jeu d'indicateurs étant caractéristique d'un défaut de court-circuit d'une cellule photovoltaïque et
- un huitième jeu d'indicateurs étant caractéristique d'un défaut de déconnexion du système photovoltaïque.

La pluralité de K couples de valeurs associant une tension à un courant peut être mesurée pour au moins une cellule photovoltaïque du système à caractériser, ou pour au moins un module photovoltaïque du système à caractériser, ou pour au moins une chaîne de modules photovoltaïques du système à caractériser.

Ladite pluralité de K couples de valeurs associant une tension à un courant peut aussi être mesurée de façon répétitive, selon un intervalle de temps, de préférence selon un intervalle de temps régulier.

Avantageusement, un changement d'un défaut identifié avec le temps est utilisé pour préciser le type de défaut identifié.

La présente invention propose également un système photovoltaïque comprenant un dispositif pour mettre en oeuvre ladite procédure pour détecter la présence d'une pluralité de défauts.

Un tel système peut comprendre

- un traceur (20) et/ou
- un ou plusieurs processeurs (40, 60, 70, 90, 100, 110, 120) et/ou
- un ou plusieurs dispositifs de stockage (50, 60)

## BRÈVE DESCRIPTION DES DESSINS

La présente invention sera mieux comprise sur la base de la description qui va suivre et des dessins en annexe sur lesquels :

- [Fig. 1] montre une courbe d'un courant (I) associé à une tension (V) d'un système photovoltaïque,
- [Fig. 2a] montre un système photovoltaïque avec un traceur IV,
- [Fig. 2b] montre une courbe mesurée par le traceur IV sur le système photovoltaïque,
- [Fig. 3] montre un système pour détecter un défaut d'un système photovoltaïque,
- [Fig. 4] montre des courbes calculées par un processeur d'extraction à partir de la courbe du courant (I) associé à la tension (V) du système photovoltaïque,
- [Fig. 5a] montre une première illustration de valeurs caractéristiques calculées par le processeur d'extraction,
- [Fig. 5b] montre une deuxième illustration de valeurs caractéristiques calculées par le processeur d'extraction,
- [Fig. 6] montre une variante de la procédure effectuée par le système pour détecter un défaut,
- [Fig. 7] montre un système photovoltaïque avec un défaut de court-circuit et une courbe d'un courant associée à une tension correspondante,
- [Fig. 8] montre un système photovoltaïque avec un défaut de salissure et une courbe d'un courant associée à une tension correspondante,
- [Fig. 9] montre un système photovoltaïque avec un défaut d'ombrage et une courbe d'un courant associée à une tension correspondante,
- [Fig. 10] montre un système photovoltaïque avec un défaut de dégradation induite potentielle (PID) et une courbe d'un courant associée à une tension correspondante.

## EXPOSE DETAILLE DE MODES DE REALISATION PARTICULIERS

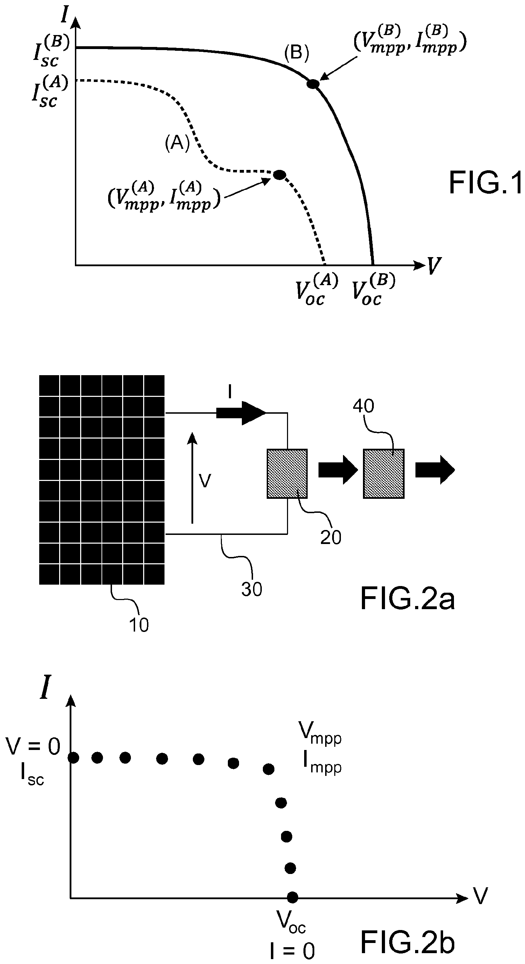

La figure 1 montre une courbe d'un courant (I) d'un système photovoltaïque associé à une tension (V) correspondante. Les courbes sont illustrées sous forme d'un tracé en continu. Chacune des courbes consiste pourtant d'une pluralité de K couples de valeurs, chaque couple associant une tension à un courant. Ainsi, on peut se référer à une courbe ou à une pluralité de couples de valeurs, la pluralité de couples de valeurs étant associée à la courbe ou représentative de celle-ci.

Sur ce type de courbe, la tension V associée à un courant de valeur zéro (I=0) est appelée "tension à circuit ouvert ($V_{OC}$)". Le courant I associé à une tension de valeur zéro (V=0) est appelé "courant de court-circuit ($I_{SC}$)". Une tension V au point de puissance maximale est appelée "tension MPP ($V_{mpp}$)". Un courant I au point de puissance maximale est appelé "courant MPP ($I_{mpp}$)".

La figure 2a montre un exemple d'un système pour une détermination de la courbe d'un courant (I) d'un système photovoltaïque associé à une tension (V) correspondante. La figure 2b montre une courbe déterminée par ledit système.

La figure 2a montre un panneau solaire (10) ou une cellule photovoltaïque. Au lieu d'un seul panneau solaire il peut s'agir également de plusieurs panneaux solaires connectés en série ou en parallèle.

La connexion de plusieurs cellules photovoltaïques est appelée "sous module". Plusieurs sous-modules sont connectés ensemble pour former un "module". La connexion de plusieurs modules et appelé une "chaîne".

On voit également un traceur IV (20) connecté par un branchement (30) au panneau solaire et un processeur de filtrage (40).

Le traceur (20) peut être tout dispositif de mesure configuré pour déterminer la tension (V) et le courant (I) du panneau solaire. Un tel traceur peut, par exemple, acquérir 100 points de mesure dans une durée de 10 secondes. Le traceur peut aussi être configuré pour acquérir 5000 points de mesure en 100 ms. Il peut aussi s'agir d'un traceur "flash test", habituellement utilisé en laboratoire pour l'acquisition de courbes du courant associé à la tension du panneau solaire.

Les valeurs de tension (V) et de courant (I) mesurées par le traceur (20) sont prélevées via les branchements (30). Le traceur IV peut être disposé au niveau de la boîte de jonction de chaque panneau solaire ou sur l'ensemble du système photovoltaïque.

La figure 2b montre une pluralité de K points ou couples de valeurs, chaque point ou couple associant une tension à un courant, déterminée par le traceur (20). Pour effectuer la mesure de chaque point ou couple de valeurs, le traceur peut déconnecter le panneau solaire (10) (ou les panneaux solaires) du système photovoltaïque, puis effectuer la mesure, et enfin reconnecter le panneau solaire au système.

De façon optionnelle, les données mesurées par le traceur (20) peuvent être traitées par un processeur de filtrage (40). Le processeur de filtrage filtre des aléas de mesure, par exemple en appliquant un filtre à moyenne glissante aux données de mesure.

Le filtre à moyenne glissante remplace chaque point de mesure par une valeur moyenne calculé à partir d'un nombre de points situés autour dudit point de mesure. Ledit nombre est ajusté en dépendance de la précision de l'échantillonnage des points de mesure.

Le processeur de filtrage peut aussi détecter et traiter des points erronés, affectés par des erreurs de mesure. Lesdits points erronés dépassent un seuil maximal ou minimal du courant et de la tension. Ces points peuvent être enlevés ou remplacés par un point calculé par une interpolation si le nombre de points avoisinants est suffisant et pas trop écarté du point à corriger.

La [Fig.2b] montre la pluralité de K points ou couples de valeurs, obtenus par le traceur (20) et optionnellement par le processeur de filtrage (40). Dans l'exemple illustré K = 11 points ou couples ont été mesurés. Le nombre K de points ou couples peut pourtant varier, on peut avoir K = 3, ou 4, ou 5 ou même plus, par exemple K = 100, ou 1000 ou K > 1000.

En figure 1, une première courbe (B) représente un système photovoltaïque sans défaut. Une deuxième courbe (A) représente un système photovoltaïque défectueux.

On observe que, en présence d'un ou de plusieurs défauts (courbe A), le courant de court-circuit et la tension à circuit ouvert sont réduits. Ainsi, la courbe A présente un courant de court-circuit et une tension à circuit ouvert plus bas que ceux de la courbe B. On observe également que la deuxième courbe (A) est déformée, comparée à la forme de la première courbe (B).

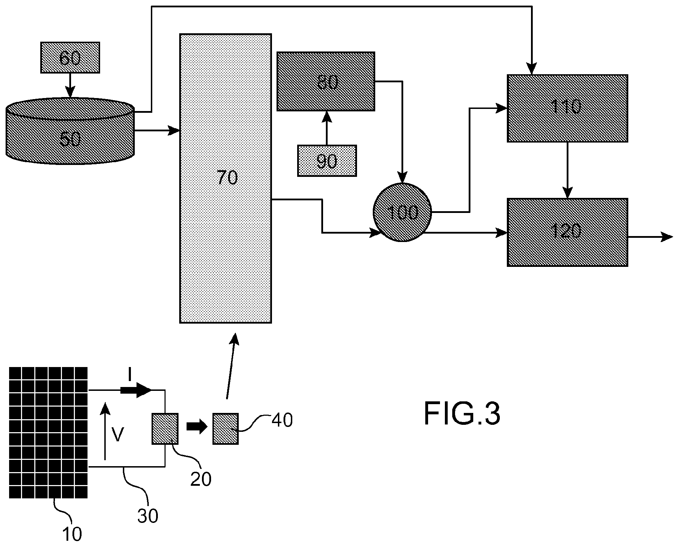

La figure 3 montre un exemple d'un système pour détecter un défaut d'un système photovoltaïque avec le système pour la détermination de la courbe A.

Ce système de la figure 3 comporte un premier dispositif de stockage (ou mémoire, 50), lequel peut mémoriser plusieurs courbes A qui représentent chacune un système photovoltaïque ayant un seul type de défaut connu. Ce type de défaut connu est enregistré avec la courbe A. Le système comporte également des premiers moyens, ou un premier processeur, de simulation (60), configurés pour fournir au premier moyen de stockage (50) une courbe A à partir d'un défaut connu.

Des moyens, par exemple un processeur ou un processeur d'interpolation (70), peuvent être programmés pour augmenter ou pour réduire le nombre de couples K représentant les courbes A provenant du premier dispositif de stockage (50).

Un processeur de filtrage (40) peut mettre en oeuvre une interpolation de premier degré pour augmenter ou pour réduire le nombre de couples de valeurs des courbes en provenance du traceur (20).

De préférence, les courbes en provenance du stockage (50) et en provenance du traceur (20) sont ajustées au même nombre de points.

Les moyens, par exemple le processeur d'interpolation (70) et/ou le processeur de filtrage (40), traitent les courbes avant l'intervention du processeur d'extraction (100). De cette façon, une précision de la courbe IV (nombre de points) n'influence pas la détection de défauts du système photovoltaïque.

Le système de la figure 3 comporte également un deuxième dispositif de stockage (ou mémoire, 80) mémorisant une courbe B d'un système sans défaut. Le deuxième dispositif de stockage est connecté à des deuxièmes moyens, par exemple un processeur, de simulation (90), configurés pour simuler la courbe B d'un système sans défaut.

Des moyens, par exemple un processeur, d'extraction (100) sont configurés pour déterminer un jeu d'indicateurs à partir de l'ensemble de la première courbe B et de la deuxième courbe A. Cette détermination du jeu d'indicateurs sera décrite plus bas.

Le système de la figure 3 comporte également des moyens, par exemple un processeur, d'apprentissage (110) et des moyens, par exemple un processeur, de comparaison (120).

Le processeur d'apprentissage (110) est programmé pour déterminer un jeu d'indicateurs caractéristique d'un défaut connu. Le processeur de comparaison (120) est configuré pour comparer le jeu d'indicateurs provenant du système photovoltaïque à caractériser avec la pluralité de N jeux caractéristique d'un seul type de défaut connu.

Le processeur d'apprentissage et le processeur de comparaison fournissent ensemble un modèle de "black box" ou "open box". Lors d'une étape d'entraînement, le processeur d'apprentissage reçoit plusieurs jeux d'indicateurs avec le défaut correspondant du premier dispositif de stockage (50), appelé un jeu de donnée d'apprentissage. Des paramètres internes du modèle sont ajustés durant cette étape en fonction des connaissances contenus dans le jeu de donné d'apprentissage.

Après l'étape d'entraînement, le processeur d'apprentissage (110) et de comparaison (120) peuvent identifier le défaut d'une courbe IV à partir du jeu d'indicateurs calculé à partir de ladite courbe. Le processeur de comparaison fournit, en résultat de la procédure, un ou plusieurs types de défaut présent sur le système photovoltaïque.

En option, le processeur de comparaison peut aussi calculer les pertes causées par chaque défaut.

La perte en puissance causée par un défaut est déterminée et calculée à partir de la courbe A du système sans défaut et la courbe B représentant le défaut. Ladite perte de puissance est égale à la différence entre la puissance $P_{mpp}(B)$ et $P_{mpp}(A)$ et se calcule par :

$$perte = P_{mpp}^{(B)} - P_{mpp}^{(A)}$$

Les puissances $P_{mpp}(B)$ et $P_{mpp}(A)$ sont calculés par :

$$P_{mpp}^{(B)} = V_{mpp}^{(B)} \times I_{mpp}^{(B)}$$

$$P_{mpp}^{(A)} = V_{mpp}^{(A)} \times I_{mpp}^{(A)}$$

Selon une variante, le processeur de filtrage, le processeur d'interpolation, le premier processeur et le deuxième processeur de simulation, le processeur d'extraction, le processeur d'apprentissage et le processeur de comparaison sont réunis en un seul processeur ou calculateur, programmé pour effectuer toutes les opérations desdits processeurs. De même, le premier dispositif de stockage et le deuxième dispositif de stockage peuvent être réunis en un seul dispositif de stockage (ou mémoire).

Afin de détecter le défaut d'un système photovoltaïque, on procède de la manière suivante : Un jeu d'indicateurs est calculé par le processeur d'extraction (100) pour chaque défaut qui doit être détecté sur le système photovoltaïque à caractériser.

Autrement dit, un premier jeu d'indicateurs est calculé pour une courbe A qui représente un système photovoltaïque ayant un seul premier défaut. Ensuite, un deuxième jeu d'indicateurs est calculé pour une autre courbe A qui représente un système photovoltaïque ayant un seul deuxième défaut connu, différent du premier défaut.

On détermine ainsi N jeux d'indicateurs, ou N est le nombre de différents défauts à caractériser ou à trouver sur un système à caractériser. Lesdites courbes A avec leur défaut correspondant sont mémorisés et lus dans le premier dispositif de stockage (50).

Puis, le processeur d'extraction (100) établit un jeu des mêmes indicateurs pour le système photovoltaïque à caractériser. Autrement dit, un jeu d'indicateurs est calculé pour une courbe A qui a été mesurée sur le système photovoltaïque à caractériser (10) par le traceur IV (20) et optionnellement le processeur de filtrage (40). Ce système (10) peut comprendre un seul panneau solaire ou plusieurs panneaux solaires connectés en série ou en parallèle. Ce système peut avoir un ou plusieurs défauts.

Enfin, le processeur de comparaison compare le jeu d'indicateurs provenant du système photovoltaïque à caractériser avec la pluralité des N jeux d'indicateurs, chacun établi pour un seul type de défaut, et fournit au moins comme résultat les défauts présents sur le système photovoltaïque.

Du fait du calcul des indicateurs tel que décrit ci-dessous, ladite comparaison permet de déterminer les défauts du système à caractériser avec une bonne, voire une très bonne, précision.

Autrement dit, la procédure pour détecter un défaut ou plusieurs défauts d'un système photovoltaïque, comprenant les étapes de :

- effectuer une mesure sur le système photovoltaïque pour déterminer la courbe A. La courbe A consiste d'une pluralité (A) de K couples de valeurs, elle peut ainsi être écrite $A = \left\{ V_j^{système}, I_j^{système} \right\}$. Chaque couple associe une tension (V) à un courant (I). L'indice j varie entre 1 et K, j = 1...K, et désigne le couple concerné parmi les K couples.
- déterminer un jeu d'indicateurs à partir des K couples valeurs mesurées sur le système photovoltaïque. La détermination du jeu d'indicateurs sera expliquée par la suite.
- comparer le jeu d'indicateurs provenant du système photovoltaïque avec une pluralité de N jeux comprenant chacun les mêmes indicateurs, chacun des N jeux étant caractéristique d'un seul type de défaut connu,
- déterminer le défaut ou les défauts en fonction du résultat de la comparaison.

Le processeur de comparaison (120) peut ensuite sortir le défaut détecté. Par exemple, le défaut présent ou les défauts affectant le système peut être affiché.

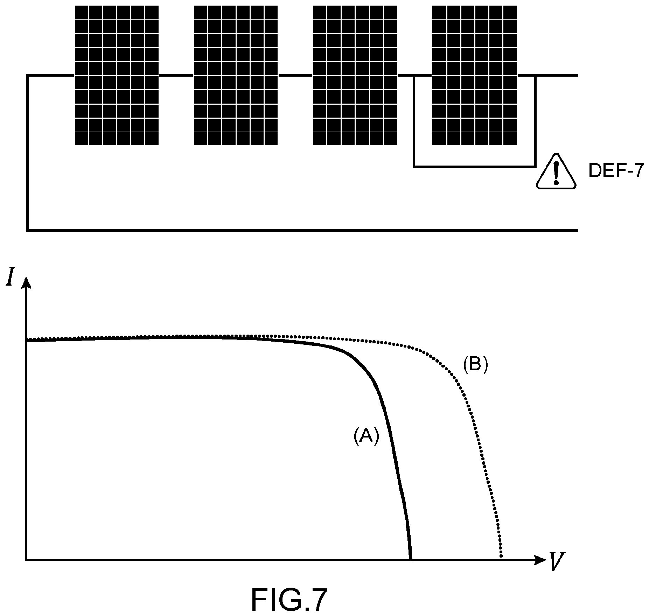

Les figures 7, 8, 9 et 10 montrent des exemples de défauts qui peuvent être détectés par ladite comparaison et ensuite fournis par le processeur de comparaison, par exemple en les affichant sur un écran.

La figure 7 montre un défaut de court-circuit d'un module photovoltaïque. Le processeur de comparaison affiche une image d'un module en court-circuit et une courbe IV typique de ce type défaut. On observe que dans le cas d'un court-circuit, la tension de circuit ouvert $V_{OC}$ de la courbe du système (A) est réduit par rapport à la courbe du système sans défaut (B).

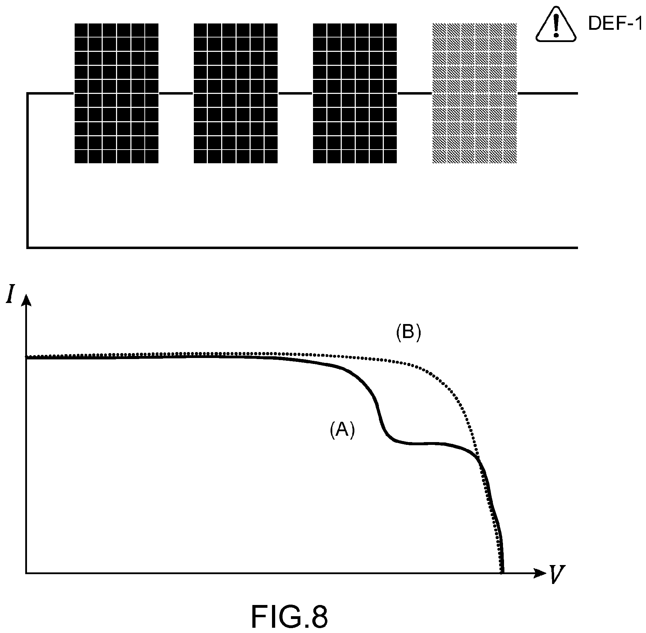

Les figures 8, 9 et 10 montrent d'autres exemples de défauts et courbes IV typiques pour ces défauts.

La figure 8 montre un défaut de salissure sur un module photovoltaïque. La courbe IV du système (A) est déformée par rapport à la courbe du système sans défaut (B).

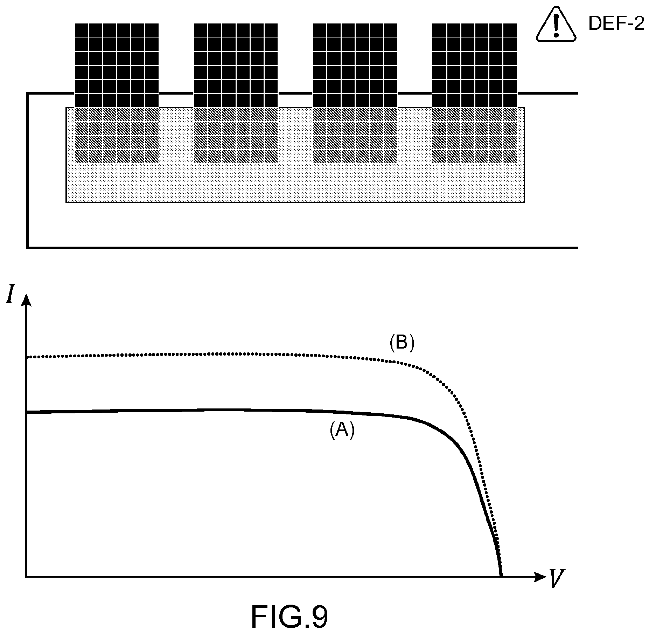

La figure 9 montre un défaut d'ombrage. La courbe IV du système (A) présente un courant de court-circuit ($I_{SC}$) réduit.

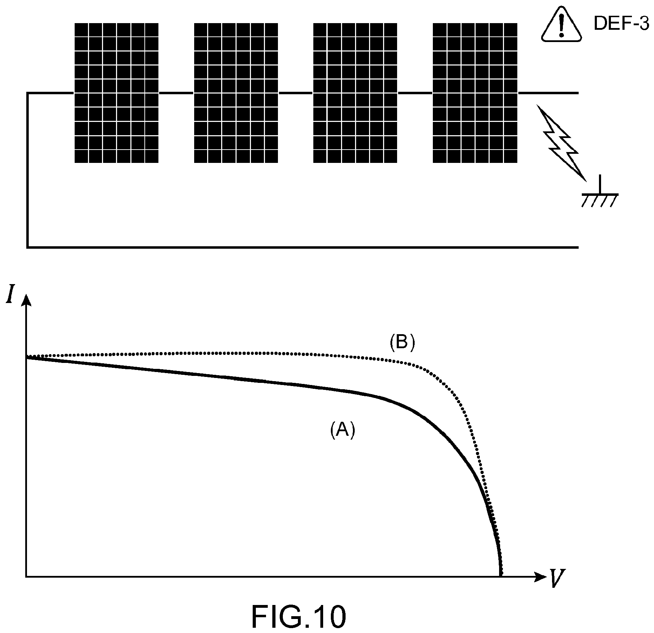

La figure 10 montre un défaut de dégradation induite potentielle (PID). La courbe IV du système (A) présente une pente descendante en comparaison avec la courbe du système sans défaut (B).

Le calcul du jeu d'indicateurs par le processeur d'extraction (100) est maintenant décrit.

Le jeu d'indicateurs représentant un défaut connu est établi par le processeur d'extraction (100) à partir d'une première courbe (B) représentant le système photovoltaïque sans défaut et d'une deuxième courbe (A) représentant le système photovoltaïque ayant un seul défaut. La courbe B est mémorisée et lue dans le deuxième dispositif de stockage (80) et la courbe A est mémorisée et lue dans le premier dispositif de stockage (50). Le processeur d'extraction (100) détermine, de cette façon, N jeux d'indicateurs pour N défauts connus.

Le processeur d'extraction (100) établit le jeu d'indicateurs pour le système à caractériser (10) à partir d'une première courbe (B) représentant le système photovoltaïque sans défaut et d'une deuxième courbe (A) mesurée sur le système à caractériser par le traceur IV (20). La courbe B est également mémorisée et lue dans le deuxième dispositif de stockage (80).

Chacune des deux courbes A et B comporte une pluralité de K points ou couples de valeurs, chaque point ou couple associant une tension à un courant. Pour la deuxième courbe (A), on peut par exemple avoir K=3, ou K=4 ou K>4 couples. En conséquence, la première courbe peut être écrite comme :

$$A = \left\{ V_j^{système}, I_j^{système} \right\}$$

et la deuxième courbe comme :

$$B = \left\{ V_j^{sans\ défaut}, I_j^{sans\ défaut} \right\}$$

où j = 1...K.

De façon avantageuse, K=3, et on a donc de préférence un premier couple correspondant à une tension à circuit ouvert ($V_{OC}$), un deuxième couple correspondant à un courant de court-circuit ($I_{SC}$) et un troisième couple correspondant à une tension et un courant à puissance maximale ($V_{MPP}$, $I_{MPP}$).

La pluralité de K couples de valeurs représentant des courbes IV peut être déterminée pour chaque cellule photovoltaïque individuellement ou pour un système photovoltaïque comprenant plusieurs cellules photovoltaïques. D'une façon générale on peut procéder à la mesure de courbes IV dans une centrale photovoltaïque pour identifier les modules, chaînes (une dizaine de modules branchés en série), ou champs (une dizaine de chaînes branchées en parallèle) en défauts pour ensuite exécuter des opérations de maintenance. Ce type de courbes IV est souvent effectué par des traceurs IV portables, ou fixes qui mesurent une centaine jusqu'à des milliers de points par courbe. D'autres formes de mesures peuvent être effectuées à l'aide de traceurs IV moins complexes au niveau de l'architecture électronique qui permettent de mesurer les trois points caractéristiques d'une courbe IV (Voc, Isc, Vmpp, Impp). Dans les conditions de laboratoire et de test, on peut trouver la mesure de courbes IV d'une cellule, d'une série de cellules, ou d'un module photovoltaïque à trois ou à plusieurs points.

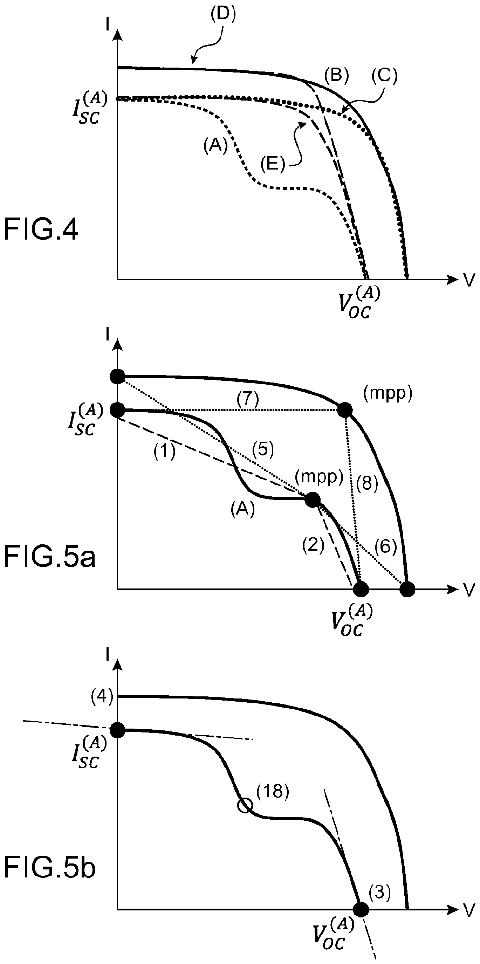

Afin de déterminer une ou plusieurs valeurs décrivant le caractère défectueux de la courbe A, le processeur d'extraction (100) calcule au moins une courbe intermédiaire. Il s'agit d'au moins une des courbes C, D et E illustrées en figure 4. Ces courbes intermédiaires sont calculées à partir des courbes A et B comme suit :

$$C = \left\{ V_j^{sans\ défaut} \quad , \quad I_j^{sans\ défaut}\ \frac{I_{SC}^{système}}{I_{SC}^{sans\ défaut}} \right\},$$

$$D = \left\{ V_j^{sans\ défaut}\ \frac{V_{OC}^{système}}{V_{OC}^{sans\ défaut}} \quad , \quad I_j^{sans\ défaut} \right\}$$

et

$$E = \left\{ V_j^{sans\ défaut}\ \frac{V_{OC}^{système}}{V_{OC}^{sans\ défaut}} \quad , \quad I_j^{sans\ défaut}\ \frac{I_{SC}^{système}}{I_{SC}^{sans\ défaut}} \right\},$$

où $V_{OC}$ représente la tension de circuit ouvert et $I_{SC}$ le courant de court-circuit du système photovoltaïque ou du panneau solaire, où j = 1...K.

Les défauts qui sont la cause de la déviation de la deuxième courbe (A) par rapport à la première courbe (B) sont particulièrement bien caractérisés par un écart entre les courbes D et B et/ou C et B et/ou E et A.

Par "écart entre deux courbes" on comprend une ou plusieurs valeur(s) qui peu(ven)t être calculée(s) par le processeur d'extraction (100) à partir des K couples de valeurs des deux courbes concernées. Cette valeur ou ces valeurs constituent ledit jeu d'indicateurs établi par le processeur d'extraction (100).

Par exemple, un écart entre D et B peut comprendre la différence entre les couples de valeurs, c'est-à-dire la différence entre les tensions et/ou la différence entre les courants de la courbe D et B. L'écart peut aussi comprendre une division des tensions et/ou des courants de la courbe D par ceux de la courbe B ou vice versa.

Le jeu d'indicateurs déterminé à partir de l'écart entre les courbes D et B et/ou entre C et B et/ou entre E et A décrit le défaut ou les défauts qui sont la cause de la déformation de la deuxième courbe (A) par rapport à la première courbe (B).

De façon avantageuse, la courbe B représentant le système photovoltaïque sans défaut peut être obtenue :

- par une simulation numérique d'un système sans défaut
- par une mesure effectuée sur un système à caractériser à un moment où ledit système est considéré sans défaut, ou
- par une mesure effectuée sur un autre système photovoltaïque considéré sans défaut.

Le deuxième dispositif de stockage (80) peut avoir sauvegardé la mesure effectuée sur le système (10) à caractériser au moment où celui-ci était considéré sans défaut. Par exemple, la mesure peut avoir été effectuée à l'aide du traceur IV (20) et le processeur de filtrage (40).

Le deuxième dispositif de stockage peut également mémoriser la courbe B, obtenue par le deuxième processeur de simulation (80). Afin de simuler la courbe B, le deuxième processeur de simulation (80) peut utiliser un modèle à une diode (modèle 1diode) d'un système photovoltaïque qui s'écrit de la manière suivante :

$$I = I_{ph} - I_0 \left( \exp\left( \frac{V + R_s I}{V_t} \right) + 1 \right) - \frac{V + R_s I}{R_p}$$

avec les paramètres $R_s$: résistance série, $R_p$: résistance parallèle, $I_0$: courant de saturation, $I_{ph}$: photo courant et $V_t$: tension thermique équivalente.

Le modèle 1diode est le modèle le plus simple d'un système photovoltaïque. Il est appelé ainsi car il modélise le circuit électrique équivalent d'un système photovoltaïque sous forme d'une source de courant (proportionnelle à l'ensoleillement), en parallèle avec une diode (l'équivalent de la cellule photovoltaïque en absence d'ensoleillement), en parallèle avec une résistance électrique d'une valeur très grande (l'équivalent de l'isolation du circuit électrique par rapport à la terre), et en série avec une résistance très faible (l'équivalent de la résistance des conducteurs de courant).

Le deuxième processeur de simulation (90) peut calculer les paramètres du modèle ci-dessus à l'aide de la feuille de données fournie par le fabricant du système photovoltaïque. Un modèle d'optimisation est utilisé pour déterminer les valeurs des paramètres qui minimisent l'écart entre la courbe estimée et les données fournies par le fabricant (trois points IV et les coefficients de température).

Dans un premier temps, le deuxième processeur de simulation détermine les données du système photovoltaïque dans les conditions standards de test. Ces données peuvent par exemple être relevées du manuel technique du fabricant des panneaux solaires. Lesdits données sont les valeurs de $V_{OC}$, $I_{SC}$, $V_{mpp}$, $I_{mpp}$. Les conditions standards sont : un ensoleillement de 1000W/m$^2$, une température du module de 25°C, et un Air Mass (la masse d'air parcourue par le rayon direct du soleil) de 1.5.

A partir des valeurs de ces quatre paramètres ($V_{oc}$, $I_{sc}$, $V_{mpp}$, $I_{mpp}$) le deuxième processeur de simulation calcule les valeurs des paramètres du modèle à 1diode ($R_s$, $R_p$, $V_t$, $I_0$, $I_{ph}$). Ce calcul peut être effectué par exemple en utilisant la procédure décrite dans « J. Bai, S. Liu, Y. Hao, Z. Zhang, M. Jiang et Y. Zhang, «Development of a new compound method to extract the fl-Ve parameters of PV modules,» Energy Conversion and Management ».

Une fois que les paramètres du modèle à 1diode ont été estimés, le deuxième processeur de simulation calcule la courbe IV en employant l'équation du modèle détaillée précédemment. En utilisant ladite formule, pour une valeur de tension V la valeur du courant I correspondant peut être calculée.

Le résultat de cette simulation est ensuite sauvegardé dans le deuxième dispositif de stockage (80).

La courbe A représentant un système photovoltaïque avec un seul défaut connu peut aussi être obtenu par une simulation.

Le premier processeur de simulation (60) peut utiliser le modèle à une diode indiqué ci-dessus. Pour simuler une courbe A représentant un défaut connu d'un système photovoltaïque, le processeur de simulation effectue les étapes suivantes :

1) choisir le type de défaut à simuler,
2) choisir l'emplacement de la cellule photovoltaïque au sein du système photovoltaïque. Autrement dit, le processeur détermine la chaîne, le module et le sous module où se trouve la cellule. L'emplacement de la cellule dans le sous module est également déterminé,
3) choisir une intensité du défaut,
4) simuler la courbe A de chaque cellule, de préférence en utilisant le modèle à une diode indiqué ci-dessus,
5) déterminer la courbe A des différents sous-modules par le calcul de la somme des courbes A des cellules appartenant au même sous-module,
6) appliquer l'effet de la diode de bypass sur la courbe A de chaque sous module. La diode de bypass est une diode branchée aux bornes du sous-module. Elle est activée à chaque moment où la tension aux bornes du sous module atteint une tension seuil d'activation de la diode. Cette tension peut être de 0.5V. Ladite activation permet d'éviter que les cellules photovoltaïques consomment de l'énergie et subissent une surchauffe en conséquence. Ladite surchauffe est aussi appelée hot spot. La surchauffe contribue à la dégradation des cellules,
7) déterminer la courbe A des différents modules par le calcul de la somme des courbes A des sous-modules appartenant au même module,
8) déterminer la courbe A de la chaîne par le calcul de la somme des courbes A des modules.

La procédure ci-dessus peut être arrêtée avant la dernière étape si le système photovoltaïque ne comprend qu'un module ou un sous-module ou une cellule.

Pour simuler le défaut du système photovoltaïque complet, le processeur de simulation prend aussi en compte l'état de fonctionnement des diodes de bypass. L'état des diodes de bypass peut être normal, en court-circuit ou en circuit-ouvert.

Pour simuler un défaut d'une cellule en utilisant le modèle à une diode, on fait varier, de préférence, la valeur d'un seul paramètre du modèle indiqué ci-dessus, en gardant constant la valeur des autres paramètres. L'état d'une cellule peut être normal, avec défaut ou en court-circuit. Par exemple, un défaut de résistance série peut être simulé en augmentant la valeur du paramètre $R_s$. Faire varier un seul paramètre en gardant constant les autres paramètres correspond à regrouper plusieurs dommages qui peuvent impacter un système photovoltaïque selon leur signature électrique.

Les différents états du système photovoltaïque peuvent être simulés comme décrit par le suivant :
Sans Défaut : Les paramètres du modèle 1diode sont égaux à leurs valeurs de référence en condition standard de test.

Défaut non homogène présent seulement sur une partie de la surface: Le photo courant $I_{ph}$ d'une partie du système photovoltaïque a baissée.

Défaut homogène présent sur la surface complète du système photovoltaïque : Le photo courant $I_{ph}$ de tout le système photovoltaïque a baissé du même niveau.

Défaut de dégradation induite potentielle (PID) : La résistance parallèle $R_p$ d'une ou plusieurs cellules a baissé.

Défaut de résistance de série plus haute : La résistance série $R_s$ d'une ou plusieurs cellules a augmenté. Il peut par exemple s'agir d'un défaut de connexion.

Défaut de diode de bypass en court-circuit : Une ou plusieurs diodes de bypass en court-circuit.

Défaut de diode de bypass en circuit ouvert et ombrage partiel : Une ou plusieurs diodes de bypass se trouvent en circuit ouvert et une baisse du photo-courant d'une partie du système.

Défaut de cellule en court-circuit : Une ou plusieurs cellules se trouvent en court-circuit.

Défaut de champ photovoltaïque déconnecté : Courant nul à la sortie du système. Il peut par exemple s'agir d'un défaut de type boîte de jonction détachée, ou câble détaché : Ce défaut engendre la perte totale de la puissance.

Le résultat de la simulation est ensuite sauvegardé dans le premier dispositif de stockage (80).

De façon alternative, plusieurs courbes A, avec leurs défauts correspondants, sont stockées dans le premier dispositif de stockage (50) et peuvent être lues par le processeur d'extraction (100).

De préférence, N = 8 jeux d'indicateurs sont déterminés par le processeur d'extraction à partir des courbes lues dans le premier dispositif de stockage (50) et le deuxième dispositif de stockage (80).

Les huit jeux d'indicateurs sont caractéristiques des défauts suivants :

Défaut 1 :

Un premier jeu d'indicateurs est caractéristique d'un défaut présent seulement sur une partie de la surface du système photovoltaïque. Il s'agit d'un défaut localisé. Tout défaut de type salissure, LID, décoloration, oxydation de la couche antireflet, buée, ombrage, brûlure, réparti d'une manière non homogène à la surface du module PV est un tel défaut.

Ce défaut entraine une déformation du point d'inflexion de la courbe IV. La position du point d'inflexion sur la courbe est caractéristique de l'intensité et de la taille relative de la surface du panneau solaire affecté par ce défaut.

Défaut 2 :

Un deuxième jeu d'indicateurs est caractéristique d'un défaut présent sur la surface complète du système photovoltaïque. Il s'agit d'un défaut homogène. Il s'agit de tout défaut de type salissure, LID, décoloration, oxydation de la couche antireflet, buée, ombrage, brûlure, réparti d'une manière homogène à la surface du module photovoltaïque. Ce défaut se caractérise par une baisse du courant de court-circuit.

Défaut 3 :

Un troisième jeu d'indicateurs est caractéristique d'un défaut de dégradation induite potentielle (PID). Il se caractérise par une augmentation de la pente de la courbe IV au voisinage du point de court-circuit.

Défaut 4 :

Un quatrième jeu d'indicateurs est caractéristique d'un défaut de connexion. Il s'agit de tout défaut de type fissure, de connexion corrodée ou brulée ou cassée, de boîte de jonction abîmée ou mal serrée, de câble abîmé ou mal serré. Le défaut est caractérise par une baisse de la pente de la courbe IV au voisinage du point de circuit ouvert.

Défaut 5 :

Un cinquième jeu d'indicateurs est caractéristique d'un défaut de la diode de by-pass en court-circuit. Il s'agit d'un défaut de type diode en court-circuit ou de diode inversée.

Ce défaut conduit à une baisse de la tension en circuit ouvert équivalente au nombre de diodes touchées par ledit défaut.

Défaut 6 :

Un sixième jeu d'indicateurs est caractéristique d'un défaut de la diode de bypass en circuit ouvert. En absence de la diode de bypass, autrement dit dans le cas de la diode mise en circuit ouvert, un défaut localisé entraîne le fonctionnement d'une partie des cellules PV en mode charge. Il en résulte une augmentation de la température des cellules.

Défaut 7 :

Un septième jeu d'indicateurs est caractéristique d'un défaut de court-circuit d'une cellule photovoltaïque. Ce défaut est caractérisé par une baisse de la tension en circuit ouvert équivalente au nombre de cellules court-circuitées.

Défaut 8 :

Un huitième jeu d'indicateurs est caractéristique d'un défaut de déconnexion du système photovoltaïque. Une boîte de jonction détachée ou un câble détaché est la cause de ce défaut. Ce défaut cause la perte totale de la puissance.
Selon une variante, le processeur d'extraction (100) calcule une ou plusieurs valeurs caractéristiques à partir de la courbe A, à partir de la courbe B, à partir de la courbe C, à partir de la courbe D et à partir de la courbe E, avant d'établir le jeu d'indicateurs basé sur ledit écart. Les valeurs caractéristiques sont calculées à partir de la pluralité de points formant chaque courbe.
Autrement dit, pour chaque courbe A, B, C, D et E, le processeur d'extraction (100) calcule une valeur ou plusieurs valeurs, dit "valeurs caractéristiques". Ensuite, le processeur détermine l'écart entre la valeur (ou les valeurs) caractéristiques de D et B et/ou de C et B et/ou de E et A afin d'établir les jeux d'indicateurs.
Par exemple, une valeur caractéristique peut comprendre une pente entre deux points de la même courbe parmi A, B, C, D où E. Autrement dit, le processeur d'extraction (100) calcule la pente d'une droite passant en deux points différents d'une seule desdites courbes.
Par exemple, le processeur d'extraction (100) calcule, pour chaque courbe la pente de la droite entre le point du courant de court-circuit ($I_{SC}$) et le point du courant de puissance maximale ($I_{mpp}$). Ainsi, la valeur caractéristique "penteSC1" est déterminée de la manière suivante :

$$\text{penteSC1} = (I_{sc} - I_{mpp})/V_{mpp} \qquad \text{(valeur caractéristique (1))}.$$

Il est également possible de calculer comme valeur caractéristique la pente de la ligne entre la tension de circuit ouvert $V_{OC}$ et la tension de puissance maximale $V_{mpp}$ :

$$\text{pente OC1} = (V_{oc} - V_{mpp})/I_{mpp} \qquad \text{(valeur caractéristique (2))}$$

La valeur caractéristique peut aussi être une dérivée de premier degré en un point d'une courbe parmi A, B, C, D où E. Il peut s'agir, par exemple, du point de circuit ouvert (OC) ou du point de court-circuit (SC) :

$$\text{pente Ioc} = \frac{dI}{dV}\Big|oc \qquad \text{(valeur caractéristique (3))}$$

$$\text{Pente Isc} = \frac{dI}{dV}\Big|sc \qquad \text{(valeur caractéristique (4))}$$

Il est aussi possible faire calculer par le processeur une pente entre deux points appartenant à deux pluralités différentes. Dans ce cas, le premier point appartient à une pluralité parmi A, C, D où E. Le deuxième point appartient toujours à la pluralité B, la courbe qui représente un système sans défaut.

$$\text{pente SC2} = (I_{SC}^{B} - I_{mpp}^{x})/V_{mpp}^{x} \qquad \text{(valeur caractéristique (5))}$$

$$\text{pente OC2} = (V_{OC}^{B} - V_{mpp}^{x})/I_{mpp}^{x} \qquad \text{(valeur caractéristique (6))}$$

$$\text{pente SC3} = (I_{SC}^{x} - I_{mpp}^{B})/V_{mpp}^{B} \qquad \text{(valeur caractéristique (7))}$$

$$\text{pente OC3} = (V_{OC}^{x} - V_{mpp}^{B})/I_{mpp}^{B} \qquad \text{(valeur caractéristique (8))}$$

où x = A, C, D où E.

La figure 5a montre une illustration des valeurs caractéristiques 1, 2, 5, 6, 7 et 8 calculés par le processeur d'extraction (100). Un trait interrompu indique une pente entre deux points de la même courbe, correspondant aux valeurs caractéristiques 1 et 2. Un trait pointillé indique une pente entre deux courbes, correspondant aux valeurs caractéristiques 5, 6, 7 et 8.

Plusieurs autres valeurs caractéristiques peuvent être calculées par le processeur, de la manière suivante à partir des courbes A, B, C, D et E.

La tension de circuit ouvert :

$V_{OC}$ (valeur caractéristique (9))

Le courant de court-circuit :

$I_{Sc}$ (valeur caractéristique (10))

La tension au point de puissance maximale :

$V_{mpp}$ (valeur caractéristique (11))

Le courant au point de puissance maximale :

$I_{mpp}$ (valeur caractéristique (12))

La norme de premier degré, calculée sur trois points (OC, SC, mpp) :

$$P_{mpp} + (V_{oc} - V_{mpp})I_{mpp}/2 + (I_{sc} - I_{mpp})V_{mpp}/2 \quad \text{(valeur caractéristique (13))}$$

où $P_{mpp}$ désigne la puissance au point de puissance maximale.

La norme de deuxième degré, calculée sur trois points (OC, SC, mpp) :

$$\frac{V_{oc}}{3}.I_{mpp}^2 + \frac{V_{mpp}}{3}.I_{sc}^2 + P_{mpp}.\frac{I_{sc}}{3} \quad \text{(valeur caractéristique (14))}$$

Le facteur de forme :

$$P_{mpp}/I_{sc}V_{oc} \quad \text{(valeur caractéristique (15))}$$

où $P_{mpp}$ désigne la puissance au point de puissance maximale.

La norme de premier degré, calculée sur tous les points :

$||V(I)||$ (valeur caractéristique (16))

La norme de deuxième degré, calculé sur tous les points:

$||V(I)||_2$ (valeur caractéristique (17))

Le maximum de la deuxième dérivée : $\max\left(\frac{d^2 I}{dV^2}\right)$ (valeur caractéristique (18))

La puissance maximale $P_{mpp}$ :

$$Pmpp = V_{mpp} \times I_{mpp} \quad \text{(valeur caractéristique (19))}$$

La figure 5b est une illustration des valeurs caractéristiques 3, 4 et 18, c'est-à-dire de la pente (dérivée d'ordre 1) du point de circuit ouvert et du point de court-circuit et le maximum de la deuxième dérivée.

Pour déterminer l'écart entre deux courbes parmi A, B, C, D et E, le processeur d'extraction (100) peut calculer une différence par soustraction des valeurs caractéristiques des deux courbes. Par exemple, le processeur peut calculer : Valeur caractéristique de A moins valeur caractéristique de B.

Autrement dit, pour chaque courbe A, B, C, D et E, le processeur d'extraction calcule une valeur caractéristique ou plusieurs valeurs caractéristiques.

Ensuite, le processeur calcule la différence entre les valeurs caractéristiques. Le processeur détermine ainsi la différence entre les valeurs caractéristiques des courbes D et B et/ou C et B et/ou E et A. Le résultat de cette opération est ledit jeu d'indicateurs, le jeu comprenant un ou plusieurs indicateurs.

Le processeur d'extraction calcule ainsi :

- un premier jeu d'indicateurs en calculant la différence entre les valeurs caractéristiques des pluralités D et B et

- un deuxième jeu d'indicateurs en calculant la différence entre les valeurs caractéristiques des pluralités C et B et
- un troisième jeu d'indicateurs en calculant la différence entre les valeurs caractéristiques des pluralités E et A.

De préférence, le calcul de la différence des valeurs caractéristiques est suivi par une division. Ladite opération avec ladite division s'écrit comme :

$$Indicateur(r) = \frac{valeur\ caractéristique\ (r)^y - valeur\ caractéristique\ (r)^x}{valeur\ caractéristique\ (r)^y}$$

où r indique le valeur caractéristique (r = 1, ..., 18) et x, y indiquent les courbes comparées, (x, y) = (D, B) ou (C, B) ou (A, E).

Cette normalisation procure l'avantage de réduire la sensibilité de la procédure de détection à la taille du système photovoltaïque.

Dans une soustraction "c - b = a" on appelle "c" le diminuende, "b" le diminuteur et le résultat "a" la différence. Ainsi, l'opération de soustraction de la valeur caractéristique $(r)^Y$ et de la valeur $(r)^X$ est suivie par une division par le diminuende de la soustraction, c'est-à-dire par une division par la valeur caractéristique $(r)^Y$.

De façon avantageuse, le processeur de comparaison (120) effectue l'étape de comparaison (c'est-à-dire la comparaison du jeu d'indicateurs provenant du système photovoltaïque à caractériser avec la pluralité des N jeux d'indicateurs, établis chacun pour un seul type de défaut), en utilisant un algorithme de classification. Cette façon de procéder sera appelée, par la suite, "méthode de classification".

L'utilisation d'un algorithme de k plus proches voisins, ou d'un algorithme d'arbre de décision ou d'un algorithme de logique floue est particulièrement avantageuse.

Pour un algorithme de k plus proches voisins, il est particulièrement avantageux que le processeur d'extraction (100) calcule les jeux d'indicateurs avec les seules valeurs caractéristiques suivantes :

| | |
|---|---|
| $V_{OC}$ | (valeur caractéristique (9), la tension de circuit ouvert) |
| $I_{SC}$ | (valeur caractéristique (10), courant de court circuit) |
| $V_{mpp}$ | (valeur caractéristique (11), tension au mpp) |
| $I_{mpp}$ | (valeur caractéristique (12), courant au mpp) |
| $(I_{sc} - I_{mpp})/V_{mpp}$ | (valeur caractéristique (1), pente) |
| $(I_{SC}^x - I_{mpp}^B)/V_{mpp}^B$ | (valeur caractéristique (7), pente) |
| $(V_{OC}^x - V_{mpp}^B)/I_{mpp}^B$ | (valeur caractéristique (8), pente) |
| $\frac{dI}{dV}\vert oc$ | (valeur caractéristique (3), pente) |
| $\frac{dI}{dV}\vert sc$ | (valeur caractéristique (4), pente) |
| $P_{mpp}/I_{sc}V_{oc}$ | (valeur caractéristique (15), facteur de forme) |

Pour l'utilisation de l'algorithme de k plus proches voisins et des courbes (A, B, C, D, E) qui comportent chacune une pluralité de K=3 couples de valeurs, il est particulièrement avantageux de calculer seulement les valeurs caractéristiques r = 1, 7, 9, 10, 11 et 12 indiqués ci-dessus et la valeur caractéristique (13) :

$$P_{mpp} + (V_{oc} - V_{mpp})I_{mpp}/2 + (I_{sc} - I_{mpp})V_{mpp}/2 \quad \text{(valeur caractéristique (13))}$$

Un algorithme d'arbre de décision des résultats particulièrement précis peuvent être obtenu en calculant seulement les valeurs caractéristiques r = 1, 9, 10, 11, 12 indiqués ci-dessus et les valeurs caractéristiques 3, 4 :

$\frac{dI}{dV}\vert oc$ (valeur caractéristique (3))

$\frac{dI}{dV}\vert sc$ (valeur caractéristique (4))

Un algorithme d'arbre de décision avec ces courbes comportant K=3 couples de valeurs donne de très bons résultats en combinaison avec les valeurs caractéristiques r = 9, 10, 11, 12, 8 et la valeur caractéristique (2) :

$$(V_{oc} - V_{mpp})/I_{mpp} \quad \text{(valeur caractéristique (2))}$$

Pour effectuer la comparaison avec le modèle de classification, le processeur de comparaison (120) reçoit un modèle du processeur d'apprentissage (110).

Le procédé d'apprentissage a déjà été décrite plus haut. L'apprentissage se fait en appui sur la base de données de courbes IV avec défaut connu contenue dans le dispositif de stockage (50). Cette base de données contient plusieurs courbes IV à des types de défauts différents et à des intensités de défauts différentes. L'apprentissage consiste à entraîner des modèles « black box » ou « open box » pour ajuster leurs paramètres internes en fonction des connaissances contenus dans le jeu de données d'apprentissage. Une fois entraînés, les modèles deviennent capables d'identifier le défaut d'une courbe IV uniquement à partir du jeu d'indicateurs qui est lui associé. Ces modèles sont ensuite utilisés par la classification pour identifier le type de défaut d'une nouvelle courbe IV.

Selon une autre variante, le processeur de comparaison (120) compare directement les valeurs du jeu d'indicateurs obtenu à partir du système à caractériser avec les valeurs des N jeux d'indicateurs, chacun étant caractéristique d'un seul défaut connu. Cette manière de procéder est appelée, par la suite : "méthode expert". Le processeur d'apprentissage n'est pas utilisé dans cette variante.

Le processeur d'extraction (100) calcule le jeu d'indicateurs d'abord pour les valeurs caractéristiques r = 3, 4, 9, 10, 11, 12, 18. Comme détaillé ci-dessus, le processeur d'extraction calcule un jeu d'indicateurs à la base du système à caractériser (10). Une pluralité de N jeux d'indicateurs est calculée, chacun des jeux caractéristiques étant caractéristique d'un seul défaut.

Par la suite, *Indicateur(r)$^{système}$* désigne l'indicateur de la valeur caractéristique r obtenu pour le système à caractériser.

Par *Indicateur(r)$^{défaut D}$* est désigné l'indicateur de la valeur caractéristique r obtenu pour le défaut numéro D, c'est-à-dire pour un des défauts 1 à 8 tels que définis ci-dessus.

Le processeur de comparaison (120) attribue ensuite un défaut au système à caractériser par les règles suivantes :

Défaut 1 (défaut localisé):

$$Indicateur(18)^{système} \neq 0$$

Défaut 2 (défaut homogène):

$$Indicateur(10)^{système} \leq Indicateur(10)^{défaut\ 2}$$

Défaut 3 (défaut PID):

$$Indicateur(4)^{système} \leq Indicateur(4)^{défaut\ 3}$$

ET

$$\left|Indicateur(4)^{système}\right| \geq W_1 \times \left|Indicateur(3)^{système}\right|$$

Avec un coefficient $W_1$ ajusté. Ce coefficient peut être déterminé lors de l'étape d'apprentissage, en analysant la base de données de courbes IV avec défaut connu.

Défaut 4 (défaut de connexion):

$$Indicateur(3)^{système} \geq Indicateur(3)^{défaut\ 4}$$

$$\left|Indicateur(4)^{système}\right| \leq W_2 \times \left|Indicateur(3)^{système}\right|$$

Avec un coefficient $W_2$ ajusté Ce coefficient peut être déterminé lors de l'étape d'apprentissage, en analysant la base de données de courbes IV avec défaut connu.

Défaut 5 (diode de bypass en court-circuit):

$$Indicateur(9)^{système} \times N_{diode} \in \mathbb{N}$$

avec $N_{diode}$ le nombre de diodes du système et $\mathbb{N}$ l'ensemble des nombres entiers.

Défaut 6 (diode de bypass en circuit ouvert) :

$$Indicateur(10)^{système} \geq Indicateur(10)^{défaut\ 6}$$

AND

$$Indicateur(4)^{système} \leq Indicateur(4)^{défaut\ 6}$$

Défaut 7 (court circuit) :

$$Indicateur(9)^{système} \times N_{cellules} \in \mathbb{N}$$

avec $N_{cellules}$ le nombre de cellules photovoltaïques du système et N l'ensemble des nombres entiers.

Défaut 8 (déconnexion) :

$$Indicateur(19)^{système} \geq Indicateur(19)^{défaut\ 9}$$

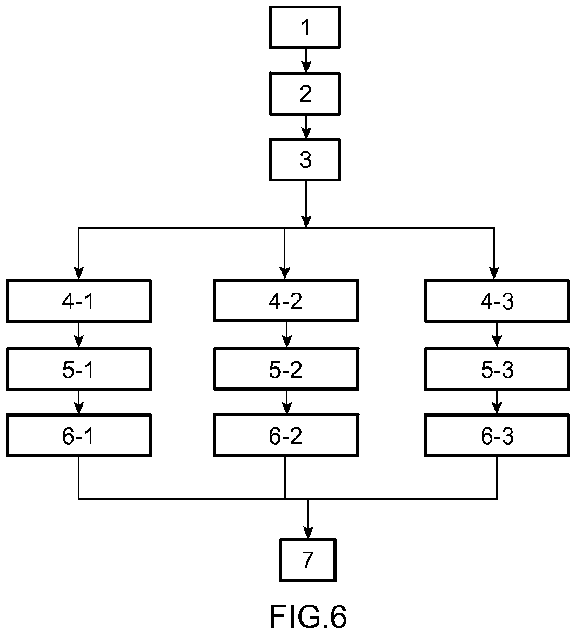

La figure 6 représente une variante préférée dans laquelle le processeur de comparaison (120) effectue l'étape de comparaison une première fois à partir du premier jeu d'indicateurs, une deuxième fois à partir du deuxième jeu d'indicateurs et une troisième fois à partir du troisième jeu d'indicateurs.

Le processeur de comparaison effectue ensuite une agrégation des résultats des trois comparaisons afin d'obtenir un résultat plus fiable.
L'agrégation se fait par rassemblement des résultats des trois comparaisons dans un seul résultat. Ce dernier résultat est particulièrement intéressant car il fournit un diagnostic du système photovoltaïque particulièrement précis. Plusieurs types de défauts et les pertes associées à chaque type de défaut sont ainsi déterminés.

Durant l'étape 1, le traceur IV (20) mesure la première courbe A sur le système photovoltaïque à caractériser (10). Autrement dit, le traceur IV détermine une pluralité de K points ou couples de valeurs, chaque point ou couple associant une tension à un courant du système photovoltaïque (10) qui doit être examiné pour une présence de défauts.

Durant l'étape 2 la courbe B qui représente le système photovoltaïque en absence de défaut est lue dans le deuxième dispositif de stockage (80).

Durant l'étape 3, le processeur d'extraction calcule les courbes intermédiaires C, D et E à partir des courbes A et B fournies durant l'étape 1 et 2.

Durant l'étape 4, le processeur d'extraction (100) calcule le jeu d'indicateurs provenant du système photovoltaïque à caractériser (10). Durant l'étape 4-1, le premier jeu d'indicateurs à la base des courbes D et B est calculé. Durant l'étape 4-2, le deuxième jeu d'indicateurs à la base des courbes C et B et durant l'étape 4-3 le troisième jeu d'indicateurs à la base des courbes E et A est calculé par le processeur d'extraction.

Durant l'étape 5, le processeur d'extraction calcule les N jeux d'indicateurs, chaque jeu d'indicateurs étant caractéristique d'un seul type de défaut.
Les N jeux d'indicateurs sont fournis séparément selon leur façon d'avoir été calculé. Autrement dit : Durant l'étape 5-1, les jeux d'indicateurs calculés à partir des courbes D et B est fourni (premier jeu d'indicateurs). Durant l'étape 5-2, les jeux d'indicateurs calculés à partir des courbes C et B (deuxième jeu d'indicateurs) et durant l'étape 5-3 les jeux d'indicateurs calculés à partir des courbes E et A (troisième jeu d'indicateurs) sont fournis. Par exemple, lesdits jeux d'indicateurs peuvent être lus d'un dispositif de mémoire.

Durant l'étape 6, processeur de comparaison compare le jeu d'indicateurs provenant du système photovoltaïque à caractériser (10) avec la pluralité des N jeux, chacun caractéristique d'un seul type de défaut.

Dans le cas d'un algorithme de classification, la comparaison est implicite, et est réalisée par le modèle appris lors de l'étape d'apprentissage (110). Par exemple, dans le cas de l'arbre de décision, une série de tests (sous forme de noeuds et de branches, l'accès à une branche se fait par validation d'un test) est effectuée sur le jeu d'indicateurs provenant du système (10), jusqu'à arriver à l'extrémité des branches où se trouve la classe de défaut qui sera finalement attribuée à la courbe IV.

Le processeur de comparaison (120) effectue ladite comparaison une première fois à partir du premier jeu d'indicateurs, une deuxième fois à partir du deuxième jeu d'indicateurs et une troisième fois à partir du troisième jeu d'indicateurs.

Autrement dit, durant l'étape 6-1, la comparaison est effectuée avec les indicateurs obtenus durant les étapes 4-1 et 5-1. Durant l'étape 6-2, la comparaison est effectuée avec les indicateurs obtenus durant les étapes 4-2 et 5-2 et durant l'étape 6-3, la comparaison est effectuée avec les indicateurs obtenus durant les étapes 4-3 et 5-3.

La comparaison peut être effectuée par la "méthode expert" ou la "méthode de classification", telles que décrites ci-dessus.

Durant l'étape 7 les résultats de la comparaison sont agrégés pour établir un résultat final.

L'agrégation se fait par simple rassemblement des résultats des trois comparaisons dans un seul. Ce résultat est particulièrement intéressant car fournit un diagnostic complet du système photovoltaïque en identifiant plusieurs types de défauts à la fois et les pertes associées à chaque type de défaut.

Le processeur de comparaison peut calculer la perte de puissance causée par chaque défaut identifié selon la méthode suivante:
La perte de puissance associée au défaut identifié lors de la comparaison des courbes D et B est égale à : la puissance de la courbe (B) - la puissance de la courbe (D).

La perte de puissance associée au défaut identifié lors de la comparaison des courbes C et B est égale à : la puissance de la courbe (B) - la puissance de la courbe (C).

La perte de puissance associée au défaut identifié lors de la comparaison des courbes A et E est égale à : la puissance de la courbe (E) - la puissance de la courbe (A).

Le traceur IV (20) peut répéter la mesure de la courbe A provenant du système à caractériser (10) plusieurs fois, avec un certain intervalle de temps entre les mesures successives. Cet intervalle de temps peut être régulier ou non. Autrement dit, la pluralité de K couples de valeurs associant une tension à un courant peut être déterminée ou mesurée de manière répétitive ou périodique, à un intervalle de temps. Pour chaque courbe A mesurée, les défauts sont déterminés par la procédure décrite ci-dessus.

Avantageusement, le processeur de comparaison peut identifier un défaut plus précisément à l'aide de son évolution avec le temps. Ainsi une telle évolution d'un défaut dans le temps peut être utilisée par le processeur pour préciser le type de défaut. Des défauts ayant la même signature électrique, c'est-à-dire la même courbe A, pourront ainsi être distingués.

Par exemple, lors d'une première mesure provenant du système photovoltaïque à caractériser, le processeur de comparaison détecte un défaut homogène (défaut 2). Ultérieurement, lors d'une deuxième mesure, ledit défaut homogène n'est plus détecté. Ensuite, encore ultérieurement, ce défaut est à nouveau détecté. Le processeur peut ainsi estimer qu'il s'agit d'un défaut homogène causé par un ombrage, l'ombre affectant de temps à autre la performance du système.

Par exemple, un défaut de déconnexion (défaut 8) peut être identifié comme résultant d'une déconnexion permanente ou d'un faux contact, par ladite mesure répétée selon un intervalle de temps.

## Revendications

**1.** Procédure pour détecter un défaut ou plusieurs défauts d'un système photovoltaïque, comprenant les étapes de :

- effectuer une mesure sur le système photovoltaïque pour déterminer une pluralité (A) de K couples de valeurs

$$A = \left\{ V_j^{système}, I_j^{système} \right\}$$

, chaque couple associant une tension (V) à un courant (I), où j = 1...K
- déterminer un jeu d'indicateurs à partir des K couples valeurs mesurés sur le système photovoltaïque,

- comparer le jeu d'indicateurs provenant du système photovoltaïque avec une pluralité de N jeux comprenant chacun les mêmes indicateurs, chacun des N jeux étant caractéristique d'un seul type de défaut connu,
- déterminer le défaut ou les défauts en fonction du résultat de la comparaison,

dans laquelle la détermination de chaque jeu d'indicateurs comprend les étapes suivantes :

- fournir une pluralité de K couples de valeurs, chaque couple associant une tension à un courant et provenant du système à caractériser ou d'un système à défaut connu A par

$$A = \left\{ V_j^{système}, I_j^{système} \right\}$$

et
- fournir une pluralité de K couples de valeurs en provenance d'un système sans défaut

$$B = \left\{ V_j^{sans\ défaut}, I_j^{sans\ défaut} \right\}, \text{ où } j = 1...K$$

- déterminer au moins une pluralité de couples intermédiaires parmi une première pluralité C, une deuxième pluralité D et une troisième pluralité E où

$$C = \left\{ V_j^{sans\ défaut}, I_j^{sans\ défaut} \frac{I_{SC}^{système}}{I_{SC}^{sans\ défaut}} \right\},$$

$$D = \left\{ V_j^{sans\ défaut} \frac{V_{OC}^{système}}{V_{OC}^{sans\ défaut}}, I_j^{sans\ défaut} \right\},$$

$$E = \left\{ V_j^{sans\ défaut} \frac{V_{OC}^{système}}{V_{OC}^{sans\ défaut}}, I_j^{sans\ défaut} \frac{I_{SC}^{système}}{I_{SC}^{sans\ défaut}} \right\},$$

où $V_{OC}$ représente la tension de circuit ouvert et $I_{SC}$ le courant de court-circuit du système,
- établir, selon la pluralité déterminée, le jeu d'indicateurs basé sur un écart entre les pluralités D et B et/ou entre les pluralités C et B et/ou entre les pluralités E et A.

2. Procédure selon la revendication 1 comprenant une étape de calcul d'une ou plusieurs valeur(s) caractéristique(s), selon la pluralité déterminée, à partir de la pluralité A et/ou à partir de la pluralité B et/ou à partir de la pluralité C et/ou à partir de la pluralité D et/ou à partir de la pluralité E avant d'établir le jeu d'indicateurs basé sur ledit écart.

3. Procédure selon la revendication 2 dans laquelle la valeur caractéristique comprend, selon la pluralité déterminée :

- une pente entre deux points, les deux points appartenant à la même pluralité parmi A, B, C, D ou E ou
- une dérivée de premier degré associée à un point appartenant à une seule pluralité parmi A, B, C, D ou E.

4. Procédure selon la revendication 2 ou 3 dans laquelle
la valeur caractéristique comprend une pente entre deux points, le premier point appartenant, selon la pluralité déterminée, à une pluralité parmi A, C, D où E, le deuxième point appartenant à la pluralité B.

5. Procédure selon la revendication 2, 3 ou 4 dans laquelle
l'écart, selon la pluralité déterminée, entre deux pluralités parmi A, B, C, D et E est déterminé par calcul d'une différence entre les valeurs caractéristiques des deux pluralités.

6. Procédure selon au moins une des revendications 2 à 5 dans laquelle

- toutes les pluralités C, D et E sont déterminées et
- plusieurs valeurs caractéristiques sont calculées, pour chacune des pluralités A, B, C, D et E et

- un premier jeu d'indicateurs est établi en calculant la différence entre les valeurs caractéristiques des pluralités D et B et
- un deuxième jeu d'indicateurs est établi en calculant la différence entre les valeurs caractéristiques des pluralités C et B et
- un troisième jeu d'indicateurs est établi en calculant la différence entre les valeurs caractéristiques des pluralités E et A.

**7.** Procédure selon la revendication 6 dans laquelle
l'étape de comparaison de jeu d'indicateurs provenant du système photovoltaïque à caractériser avec la pluralité de N jeux comprenant chacun les mêmes indicateurs est effectuée :

une première fois à partir du premier jeu d'indicateurs et/ou,
une deuxième fois à partir du deuxième jeu d'indicateurs et/ou
une troisième fois à partir du troisième jeu d'indicateurs,
de préférence à partir du premier et deuxième et troisième jeu d'indicateurs.

**8.** Procédure selon au moins une des revendications 1 à 7 dans laquelle l'étape de comparaison est effectué par un algorithme de classification, de préférence par un algorithme de k plus proches voisins, ou un algorithme d'arbre de décision ou un algorithme de logique floue.

**9.** Procédure selon au moins une des revendications 1 à 8 dans laquelle

K=3,
les 3 couples comportant de préférence un premier couple comprenant une tension à circuit ouvert ($V_{OC}$), un deuxième couple comprenant un courant de court-circuit ($I_{CC}$) et un troisième couple comprenant une tension et un courant à puissance maximale ($V_{MPP}$ , $I_{MPP}$).

**10.** Procédure selon au moins une des revendications 1 à 9 dans laquelle
la pluralité de K couples de valeurs provenant d'un système sans défaut est obtenue :

- par une simulation numérique d'un système sans défaut,
- ou par une mesure effectuée sur le système à caractériser à un moment où ledit système était considéré sans défaut ou
- par une mesure effectuée sur un autre système photovoltaïque considéré sans défaut.

**11.** Procédure selon la revendication 8 et 10 dans laquelle

l'algorithme de classification a été entraîné en utilisant une pluralité B provenant d'un système sans défaut et une ou plusieurs pluralités A provenant d'un système à défaut connu,
dans laquelle les pluralités A et B ont été obtenus par une simulation numérique du système.

**12.** Procédure selon au moins une des revendications 1 à 11 dans laquelle

- un premier jeu d'indicateurs est caractéristique d'un défaut de seulement une partie d'une surface du système photovoltaïque et
- un deuxième jeu d'indicateurs est caractéristique d'un défaut présent sur la surface complète du système photovoltaïque et
- un troisième jeu d'indicateurs est caractéristique d'un défaut de dégradation induite potentielle (PID) et
- un quatrième jeu d'indicateurs est caractéristique d'un défaut de connexion et
- un cinquième jeu d'indicateurs est caractéristique d'un défaut de la diode de bypass en court-circuit et
- un sixième jeu d'indicateurs est caractéristique d'un défaut de la diode de bypass en circuit ouvert et
- un septième jeu d'indicateurs est caractéristique d'un défaut de court-circuit d'une cellule photovoltaïque et
- un huitième jeu d'indicateurs est caractéristique d'un défaut de déconnexion du système photovoltaïque.

**13.** Procédure selon au moins une des revendications 1 à 12 dans laquelle la pluralité de K couples de valeurs associant une tension à un courant est mesurée pour au moins une cellule photovoltaïque du système à caractériser, ou pour au moins un module photovoltaïque du système à caractériser, ou pour au moins une chaîne de modules photovoltaïques du système à caractériser.

**14.** Procédure selon au moins une des revendications 1 à 13 dans laquelle
la pluralité de K couples de valeurs associant une tension à un courant est mesurée de façon répétitive, selon un intervalle de temps, de préférence selon un intervalle de temps régulier.

**15.** Procédure selon la revendication 14 dans laquelle
un changement d'un défaut identifié avec le temps est utilisé pour préciser le type de défaut identifié.

**16.** Système photovoltaïque comprenant un dispositif pour mettre en oeuvre une procédure pour détecter la présence d'une pluralité de défauts selon au moins une des revendications 1 à 15.

**17.** Système photovoltaïque selon la revendication 16 dans laquelle le dispositif comprend :

- un traceur (20) et/ou
- un ou plusieurs processeurs (40, 60, 70, 90, 100, 110, 120) et/ou
- un ou plusieurs dispositifs de stockage (50, 60).


**Patentansprüche**

**1.** Verfahren zum Erkennen eines Fehlers oder mehrerer Fehler in einem Photovoltaiksystem, die Schritte umfassend zum:

- Durchführen einer Messung am Photovoltaiksystem, um eine Pluralität (A) von K Wertepaaren zu bestimmen:

$A = \{V_j^{System}, I_j^{System}\}$ , wobei jedes Paar eine Spannung (V) mit einem Strom (I) assoziiert, wobei j = 1...K,
- Bestimmen eines Satzes von Indikatoren ausgehend von den K Wertepaaren, die am Photovoltaiksystem gemessen wurden,
- Vergleichen des Satzes von Indikatoren, die aus dem Photovoltaiksystem stammen, mit einer Pluralität von N Sätzen, die jeweils dieselben Indikatoren umfassen, wobei jeder der N Sätze für einen einzigen bekannten Fehlertyp bezeichnend ist,
- Bestimmen des Fehlers oder der Fehler basierend auf dem Vergleichsergebnis,

wobei die Bestimmung jedes Satzes von Indikatoren die folgenden Schritte umfasst:

- Bereitstellen einer Pluralität von K Wertepaaren, wobei jedes Paar eine Spannung mit einem Strom assoziiert und aus dem zu bezeichnenden System stammt oder einem System mit bekanntem Fehler A, wobei:

$$A = \{V_j^{System}, I_j^{System}\},$$

und
- Bereitstellen einer Pluralität von K Wertepaaren, die aus einem fehlerfreien System stammen

$$B = \{V_j^{fehlerfrei}, I_j^{fehlerfrei}\}, \text{ wobei } j = 1...K,$$

- Bestimmen mindestens einer Pluralität von Zwischenpaaren unter einer ersten Pluralität C, einer zweiten Pluralität D und einer dritten Pluralität E, wobei:

$$C = \left\{V_j^{fehlerfrei}, I_j^{fehlerfrei}, \frac{I_{SC}^{System}}{I_{SC}^{fehlerfrei}}\right\},$$

$$D = \left\{V_j^{fehlerfrei}, \frac{V_{OC}^{System}}{V_{OC}^{fehlerfrei}}, I_j^{fehlerfrei}\right\},$$

$$E = \left\{ V_j^{fehlerfrei}, \frac{V_{OC}^{System}}{V_{OC}^{fehlerfrei}}, I_j^{fehlerfrei}, \frac{I_{SC}^{System}}{I_{SC}^{fehlerfrei}} \right\},$$

wobei $V_{OC}$ die Spannung der offenen Schaltung und Isc den Kurzschlussstrom des Systems darstellt,
- Erstellen, gemäß der bestimmten Pluralität, des Satzes von Indikatoren basierend auf einer Abweichung zwischen den Pluralitäten D und B und/oder zwischen den Pluralitäten C und B und/oder zwischen den Pluralitäten E und A.

2. Verfahren nach Anspruch 1, einen Schritt zur Berechnung eines oder mehrerer bezeichnender Werte umfassend gemäß der bestimmten Pluralität ausgehend von der Pluralität A und/oder ausgehend von der Pluralität B und/oder ausgehend von der Pluralität C und/oder ausgehend von der Pluralität D und/oder ausgehend von der Pluralität E, bevor der auf der Abweichung basierende Satz von Indikatoren erstellen wird.

3. Verfahren nach Anspruch 2, wobei der bezeichnende Wert, gemäß der bestimmten Pluralität, umfasst:

- eine Steigung zwischen zwei Punkten, wobei die zwei Punkte zu derselben Pluralität unter A, B, C, D oder E gehören oder
- eine Ableitung ersten Grades, die mit einem Punkt assoziiert ist, der zu einer einzelnen Pluralität unter A, B, C, D oder E gehört.

4. Verfahren nach Anspruch 2 oder 3, wobei
der bezeichnende Wert eine Steigung zwischen zwei Punkten umfasst, wobei der erste Punkt, gemäß der bestimmten Pluralität, zu einer Pluralität unter A, C, D oder E gehört, wobei der zweite Punkt zur Pluralität B gehört.

5. Verfahren nach Anspruch 2, 3 oder 4, wobei die Abweichung, gemäß der bestimmten Pluralität, zwischen zwei Pluralitäten unter A, B, C, D und E durch Berechnung einer Differenz zwischen den bezeichnenden Werten der zwei Pluralitäten bestimmt wird.

6. Verfahren nach mindestens einem der Ansprüche 2 bis 5, wobei

- alle Pluralitäten C, D und E bestimmt werden, und
- mehrere bezeichnende Werte berechnet werden, für jede der Pluralitäten A, B, C, D und E, und
- ein erster Satz von Indikatoren erstellt wird, indem die Differenz zwischen den bezeichnenden Werten der Pluralitäten D und B berechnet wird, und
- ein zweiter Satz von Indikatoren erstellt wird, indem die Differenz zwischen den bezeichnenden Werten der Pluralität C und B berechnet wird, und
- ein dritter Satz von Indikatoren erstellt wird, indem die Differenz zwischen den bezeichnenden Werten der Pluralität E und A berechnet wird.

7. Verfahren nach Anspruch 6, wobei
der Schritt des Vergleichens des Satzes von Indikatoren, die aus dem zu bezeichnenden Photovoltaiksystem mit der Pluralität von N Sätzen stammen, die jeweils dieselben Indikatoren umfassen, durchgeführt wird:

ein erstes Mal ausgehend vom ersten Satz von Indikatoren und/oder,
ein zweites Mal ausgehend vom zweiten Satz von Indikatoren und/oder,
ein drittes Mal ausgehend vom dritten Satz von Indikatoren,
vorzugsweise ausgehend vom ersten und zweiten und dritten Satz von Indikatoren.

8. Verfahren nach mindestens einem der Ansprüche 1 bis 7, wobei
der Vergleichsschritt durch einen Klassifizierungsalgorithmus durchgeführt wird, vorzugsweise durch einen k-Nächste-Nachbarn-Algorithmus, oder einen Entscheidungsbaum-Algorithmus oder einen Fuzzylogik-Algorithmus.

9. Verfahren nach mindestens einem der Ansprüche 1 bis 8, wobei

K = 3,
wobei die 3 Paare vorzugsweise ein erstes Paar enthalten, das eine Spannung der offenen Schaltung ($V_{OC}$) umfasst, ein zweites Paar, das einen Kurzschlussstrom ($I_{CC}$) umfasst und ein drittes Paar, das eine Spannung und einen Strom bei maximaler Leistung ($V_{MPP}$, $I_{MPP}$) umfasst.

10. Verfahren nach mindestens einem der Ansprüche 1 bis 9, wobei die Pluralität von K Wertepaaren, die aus einem fehlerfreien System stammen, erhalten wird:

- durch eine numerische Simulation eines fehlerfreien Systems,
- oder durch eine Messung, die am zu bezeichnenden System zu einem Zeitpunkt durchgeführt wird, zu dem das System als fehlerfrei erachtet wird oder
- durch eine Messung, die an einem anderen Photovoltaiksystem durchgeführt wird, das als fehlerfrei erachtet wird.

11. Verfahren nach Anspruch 8 und 10, wobei

der Klassifizierungsalgorithmus unter Verwendung einer Pluralität B trainiert wurde, die aus einem fehlerfreien System stammt und einer oder mehreren Pluralitäten A, die aus einem System mit einem bekanntem Fehler stammen,
wobei die Pluralitäten A und B durch numerische Simulation des Systems erhalten wurden.

12. Verfahren nach mindestens einem der Ansprüche 1 bis 11, wobei

- ein erster Satz von Indikatoren bezeichnend ist für einen Fehler von lediglich einem Teil einer Oberfläche des Photovoltaiksystems, und
- ein zweiter Satz von Indikatoren bezeichnend ist für einen Fehler auf der gesamten Oberfläche des Photovoltaiksystems, und
- ein dritter Satz von Indikatoren bezeichnend ist für einen potenziell induzierten Degradationsfehler (PID), und
- ein vierter Satz von Indikatoren bezeichnend ist für einen Verbindungsfehler, und
- ein fünfter Satz von Indikatoren bezeichnend ist für einen Fehler einer kurzgeschlossenen Bypass-Diode, und
- ein sechster Satz von Indikatoren bezeichnend ist für einen Fehler der Bypass-Diode in der offenen Schaltung, und
- ein siebter Satz von Indikatoren bezeichnend ist für einen Kurzschlussfehler einer Photovoltaikzelle, und
- ein achter Satz von Indikatoren bezeichnend ist für einen Fehler bei der Abschaltung des Photovoltaiksystems.

13. Verfahren nach mindestens einem der Ansprüche 1 bis 12, wobei die Pluralität von K Wertepaaren, die eine Spannung mit einem Strom assoziieren, für mindestens eine Photovoltaikzelle des zu bezeichnenden Systems gemessen wird oder für mindestens ein Photovoltaikmodul des zu bezeichnenden Systems oder für mindestens eine Kette von Photovoltaikmodulen des zu bezeichnenden Systems.

14. Verfahren nach mindestens einem der Ansprüche 1 bis 13, wobei die Pluralität von K Wertepaaren, die eine Spannung mit einem Strom assoziieren, wiederholend in einem Zeitintervall gemessen wird, vorzugsweise in einem regelmäßigen Zeitintervall.

15. Verfahren nach Anspruch 14, wobei eine Änderung eines Fehlers, der mit der Zeit identifiziert wird, verwendet wird, um den Typ des identifizierten Fehlers anzugeben.

16. Photovoltaiksystem, das eine Vorrichtung zum Implementieren eines Verfahrens zum Erkennen des Vorhandenseins einer Pluralität von Fehlern nach mindestens einem der Ansprüche 1 bis 15 umfasst.

17. Photovoltaiksystem nach Anspruch 16, wobei die Vorrichtung umfasst:

- einen Tracer (20), und/oder
- einen oder mehrere Prozessoren (40, 60, 70, 90, 100, 110, 120), und/oder
- eine oder mehrere Speichervorrichtungen (50, 60).

**Claims**

1. A procedure for detecting a fault or several faults of a photovoltaic system, comprising the steps of:

- performing a measurement on the photovoltaic system to determine a plurality (A) of K pairs of values $A = \left\{ V_j^{system}, I_j^{system} \right\}$ , each pair associating a voltage (V) with a current (I), where j = 1...K
- determining a set of indicators from the K pairs of values measured on the photovoltaic system,
- comparing the set of indicators originating from the photovoltaic system with a plurality of N sets each comprising the same indicators, each of the N sets being characteristic of a single type of known fault,
- determining the fault or faults depending on the result of the comparison,

wherein the determination of each set of indicators comprises the following steps:

- providing a plurality of K pairs of values, each pair associating a voltage with a current and originating from the system to be characterised or from a system with a known fault A by

$$ A = \left\{ V_j^{system}, I_j^{system} \right\} $$

and
- providing a plurality of K pairs of values from a fault-free system

$$ B = \left\{ V_j^{fault\,free}, I_j^{fault\,free} \right\} $$

where j = 1...K
- determining at least one plurality of intermediate pairs from a first plurality C, a second plurality D and a third plurality E where

$$ C = \left\{ V_j^{ffault\,free}, I_j^{fault\,free} \, \frac{I_{SC}^{system}}{I_{SC}^{fault-free}} \right\} $$

$$ D = \left\{ V_j^{fault\,free} \, \frac{V_{OC}^{system}}{V_{OC}^{fault\,free}}, I_j^{fault\,free} \right\} $$

$$ E = \left\{ V_j^{fault\,free} \, \frac{V_{OC}^{system}}{V_{OC}^{fault\,free}}, I_j^{fault\,free} \, \frac{I_{SC}^{system}}{I_{SC}^{fault\,free}} \right\} $$

where $V_{OC}$ represents the open circuit voltage and $I_{SC}$ the short-circuit current of the system,
- establishing, according to the determined plurality, the set of indicators based on a deviation between the pluralities D and B and/or between the pluralities C and B and/or between the pluralities E and A.

2. The procedure according to claim 1, comprising a step of calculating one or more characteristic value(s), according to the determined plurality, from the plurality A and/or from the plurality B and/or from the plurality C and/or from the plurality D and/or from the plurality E before establishing the set of indicators based on said deviation.

3. The procedure according to claim 2, wherein the characteristic value comprises, according to the determined plurality:

- a slope between two points, the two points belonging to the same plurality of A, B, C, D or E or
- a first-degree derivative associated with a point belonging to a single plurality of A, B, C, D or E.

4. The procedure according to claim 2 or 3, wherein the characteristic value comprises a slope between two points, the first point belonging, according to the determined plurality, to a plurality of A, C, D or E, the second point belonging to the plurality B.

5.  The procedure according to claim 2, 3 or 4, wherein the deviation, according to the determined plurality, between two pluralities of A, B, C, D and E is determined by calculating a difference between the characteristic values of the two pluralities.

6.  The procedure according to at least one of claims 2 to 5, wherein

    - all pluralities C, D and E are determined and
    - several characteristic values are calculated, for each of the pluralities A, B, C, D and E and
    - a first set of indicators is established by calculating the difference between the characteristic values of the pluralities D and B and
    - a second set of indicators is established by calculating the difference between the characteristic values of the pluralities C and B and
    - a third set of indicators is established by calculating the difference between the characteristic values of the pluralities E and A.

7.  The procedure according to claim 6, wherein the step of comparing the set of indicators originating from the photovoltaic system to be characterised with the plurality of N sets each comprising the same indicators is performed:

    a first time from the first set of indicators and/or,
    a second time from the second set of indicators and/or
    a third time from the third set of indicators,
    preferably from the first and second and third set of indicators.

8.  The procedure according to at least one of claims 1 to 7, wherein the comparison step is performed by a classification algorithm, preferably by a k-nearest neighbours algorithm, or a decision tree algorithm or a fuzzy logic algorithm.

9.  The procedure according to at least one of claims 1 to 8, wherein K=3,
    the 3 pairs preferably including a first pair comprising an open-circuit voltage ($V_{OC}$), a second pair comprising a short-circuit current (ICC) and a third pair comprising a voltage and a current at maximum power ($V_{MPP}$, $I_{MPP}$).

10. The procedure according to at least one of claims 1 to 9, wherein the plurality of K pairs of values originating from a fault-free system is obtained:

    - by a numerical simulation of a fault-free system,
    - or by a measurement performed on the system to be characterised at a time when said system was considered fault-free or
    - by a measurement performed on another photovoltaic system considered fault-free.

11. The procedure according to claim 8 and 10, wherein

    the classification algorithm has been trained using a plurality B originating from a fault-free system and one or more pluralities A originating from a system with known fault,
    wherein the pluralities A and B have been obtained by a numerical simulation of the system.

12. The procedure according to at least one of claims 1 to 11, wherein

    - a first set of indicators is characteristic of a fault of only one portion of a surface of the photovoltaic system and
    - a second set of indicators is characteristic of a fault present on the complete surface of the photovoltaic system and
    - a third set of indicators is characteristic of a potential induced degradation (PID) fault and
    - a fourth set of indicators is characteristic of a connection fault
    - a fifth set of indicators is characteristic of a fault of the bypass diode in short-circuit and
    - a sixth set of indicators is characteristic of a fault of the bypass diode in open circuit and
    - a seventh set of indicators is characteristic of a short-circuit fault of a photovoltaic cell and
    - an eighth set of indicators is characteristic of a disconnection fault of the photovoltaic system.

13. The procedure according to at least one of claims 1 to 12, wherein the plurality of K pairs of values associating a voltage with a current is measured for at least one photovoltaic cell of the system to be characterised, or for at least one photovoltaic module of the system to be characterised, or for at least one string of photovoltaic modules of the system to be characterised.

14. The procedure according to at least one of claims 1 to 13, wherein
the plurality of K pairs of values associating a voltage with a current is measured repetitively, according to a time interval, preferably according to a regular time interval.

15. The procedure according to claim 14, wherein
a change in an identified fault over time is used to specify the type of identified fault.

16. A photovoltaic system comprising a device to implement a procedure for detecting the presence of a plurality of faults according to at least one of claims 1 to 15.

17. The photovoltaic system according to claim 16, wherein the device comprises:

   - a tracker (20) and/or
   - one or more processors (40, 60, 70, 90, 100, 110, 120) and/or
   - one or more storage devices (50, 60).

FIG.1

FIG.2a

FIG.2b

FIG.3

FIG.4

FIG.5a

FIG.5b

FIG.6

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015094967 A1

**Littérature non-brevet citée dans la description**

- **J. BAI ; S. LIU ; Y. HAO ; Z. ZHANG ; M. JIANG ; Y. ZHANG.** Development of a new compound method to extract the fl-Ve parameters of PV modules. *Energy Conversion and Management*